(19) Europäisches Patentamt
European Patent Office
Office européen des brevets

(11) **EP 4 439 906 A1**

(12) **EUROPEAN PATENT APPLICATION**
published in accordance with Art. 153(4) EPC

(43) Date of publication:
**02.10.2024 Bulletin 2024/40**

(21) Application number: **22912985.3**

(22) Date of filing: **11.03.2022**

(51) International Patent Classification (IPC):
**H02J 3/24** (2006.01)

(52) Cooperative Patent Classification (CPC):
**H02H 3/16; H02J 3/00; H02J 3/24; H02J 3/28;
H02J 3/30; H02J 3/38; H02J 9/06**

(86) International application number:
**PCT/CN2022/080424**

(87) International publication number:
**WO 2023/123679 (06.07.2023 Gazette 2023/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.12.2021 CN 202111653363**

(71) Applicant: **Beijing Etechwin Electric Co., Ltd.
Beijing Economic & Technological Development
Zone
Daxing District
Beijing 100176 (CN)**

(72) Inventors:
• **ZHANG, Wei**
**Beijing 100176 (CN)**
• **WEI, Dan**
**Beijing 100176 (CN)**
• **ZHENG, Dehua**
**Beijing 100176 (CN)**
• **ALEMU, Solomon Netsanet**
**Beijing 100176 (CN)**
• **GOU, Fuhao**
**Beijing 100176 (CN)**

(74) Representative: **Hoffmann Eitle
Patent- und Rechtsanwälte PartmbB
Arabellastraße 30
81925 München (DE)**

(54) **MICROGRID CONTROL METHOD AND APPARATUS AND REGIONAL POWER SYSTEM**

(57) The present disclosure provides a control method for a micro-grid, a control device for a micro-grid, and a regional power system. The micro-grid is connected to a target load, and the micro-grid include a power intensive storage device and an energy intensive storage device as energy storage devices. The control method includes: determining whether the target load is disconnected from a power grid; and controlling output power of the power intensive storage device and the energy intensive storage device after the target load is disconnected from the power grid, so that a voltage of the micro-grid tracks a rated voltage of the micro-grid and a frequency of the micro-grid tracks a rated frequency of the micro-grid.

FIG. 8

## Description

### TECHNICAL FIELD

The present disclosure generally relates to the technical field of electric power, and in particular, to a control method for a micro-grid, a control device for a micro-grid, and a regional power system.

### BACKGROUND

The initial characteristics of power grid faults are similar to those of transient and dynamic disturbance, so the disturbance and the faults should be accurately distinguished. For the disturbance, an accurate identification should be made by a control system for the transient and dynamic disturbance and transient disturbance of the power grid, and a normal value will be quickly returned in fault detection signal in order to ensure a circuit breaker does not trip. For the faults, the fault detection signal is configured to keep a value that is quite different from the conventional value, and last for a long period of time, and a fault protection system should be configured to accurately trip the reasonable circuit breaker according to the location of a fault point.

At present, there are a large number of precision loads that require high-quality power supply, such as chip processing plants, hospitals, and high-precision device industrial parks. Due to the occurrence of faults, the supply voltage of the system cannot meet the requirements of the above precision loads on power quality within a specified time range, which will bring huge losses to enterprises and the society. Therefore, how to protect the precision loads when power grid faults occur is an important technical and economic problem at present. One of the existing solutions is to add a self-provided thermal power plant to the processing enterprise or park with the precision loads, however, this solution is not only has high costs, but also has high emissions, so it has no economic value or social promotion significance. The second existing technical solution is to add an uninterruptible power supply (UPS) at the precision load end. The UPS can supply power to the precision load for a short time when the power grid fails. However, most of the current UPSs are lead-carbon batteries or lithium batteries at present, which are practical as emergency small-load standby power supplies but are low effective in economy for a large number of large precision loads. Furthermore, the capacity and operating mode of the UPS cannot solve voltage flickers and short-time voltage interruptions at the load end caused by regional power grid faults, failing to protect the precision loads. The third existing technical solution is to improve the power quality by means of reactive power compensation or active filter equipment. However, this solution is generally aimed at the situation of insufficient reactive power or voltage drop caused by a load, and cannot solve the flickers and short-time interruptions of power voltage caused by faults, let alone guarantee the safe and stable operation of the precision loads. Thus the current UPS technology and the conventional micro-grid technology can no longer guarantee the stable operation of the precision loads within a period of time from the occurrence of permanent faults to recovery.

### SUMMARY

Exemplary embodiments of the present disclosure are to provide a control method for a micro-grid, a control device for a micro-grid and a regional power system, which can effectively guarantee the stability of power supply for a target load (e.g. a precision load).

According to a first aspect of an embodiment of the present disclosure, there is provided a control method for a micro-grid, the micro-grid being connected to a target load, the micro-grid including a power intensive storage device and an energy intensive storage device as energy storage devices, and the control method including: determining whether the target load is disconnected from a power grid; and controlling, after the target load is disconnected from the power grid, output power of the power intensive storage device and the energy intensive storage device, so that a voltage of the micro-grid tracks a rated voltage of the micro-grid and a frequency of the micro-grid tracks a rated frequency of the micro-grid.

According to a second aspect of an embodiment of the present disclosure, there is provided a control device for a micro-grid, the micro-grid being connected to a target load, the micro-grid including a power intensive storage device and an energy intensive storage device as energy storage devices, and the control device including: a state determination unit, configured to determine whether the target load is disconnected from the power grid; and an energy storage control unit, configured to control, after the target load is disconnected from the power grid, output power of the power intensive storage device and the energy intensive storage device, so that a voltage of the micro-grid tracks a rated voltage of the micro-grid and a frequency of the micro-grid tracks a rated frequency of the micro-grid.

According to a third aspect of an embodiment of the present disclosure, there is provided a computer-readable storage medium storing a computer program, the computer program, when executed by the processor, causing a processor to execute the control method for a micro-grid as described above.

According to a fourth aspect of an embodiment of the present disclosure, there is provided a control device for a micro-grid, including: a processor; and a memory storing a computer program, the computer program, when executed by the processor, causing the processor to execute the control method for a micro-grid as described above.

According to a fifth aspect of an embodiment of the present disclosure, there is provided a regional power system, including a micro-grid and the control device for a micro-grid as described above, the micro-grid being connected to a target load, and the micro-grid including a power intensive storage device and an energy intensive storage device as energy storage devices; and the control device being configured to determine whether the target load is disconnected from the power grid, and control, after the target load is disconnected from the power grid, output power of the power intensive storage device and the energy intensive storage device, so that a voltage of the micro-grid tracks a rated voltage of the micro-grid and a frequency of the micro-grid tracks a rated frequency of the micro-grid.

According to the control method for a micro-grid, the control device for a micro-grid and the regional power system in the exemplary embodiments of the present disclosure, by controlling the power intensive storage device and the energy intensive storage device of the micro-grid, the target load can be protected when a fault occurs in the power grid, thus guaranteeing uninterrupted power supply for the target load and increasing the stability of power supply for the target load. Particularly after a permanent fault occurs in the power grid, a precision load can be protected.

A part of additional aspects and/or advantages of the general concept of the present disclosure will be set forth in the following description, and another part will be apparent from the description, or can be learned by the implementation of the general concept of the present disclosure.

## BRIEF DESCRIPTION OF THE DRAWINGS

The above and other objects and features of exemplary embodiments of the present disclosure will become more apparent from the following description with reference to the accompanying drawings exemplarily illustrating the embodiments, wherein:

FIG. 1 shows an example of a topological structure of a regional power system according to an exemplary embodiment of the present disclosure;

FIG. 2 shows an example of a positive-sequence equivalent circuit diagram subsequent to the occurrence of a fault according to an exemplary embodiment of the present disclosure;

FIG. 3 shows an example of a negative-sequence equivalent circuit diagram subsequent to the occurrence of a fault according to an exemplary embodiment of the present disclosure;

FIG. 4 shows an example of a zero-sequence network architecture diagram subsequent to the occurrence of a fault according to an exemplary embodiment of the present disclosure;

FIG. 5 shows an example of a zero-sequence network equivalent diagram subsequent to the occurrence of a fault according to an exemplary embodiment of the present disclosure;

FIG. 6 shows an example of positive-sequence, negative-sequence and zero-sequence Thevenin-equivalent circuit diagrams according to an exemplary embodiment of the present disclosure;

FIG. 7 shows an example of an equivalent diagram of a composite-sequence network with a single-phase short-circuit fault according to an exemplary embodiment of the present disclosure;

FIG. 8 shows a flowchart of a control method for a micro-grid according to an exemplary embodiment of the present disclosure;

FIG. 9 shows an example of a topological structure including a micro-grid according to an exemplary embodiment of the present disclosure;

FIG. 10 shows an example of operation control states of an energy intensive storage device and a power intensive storage device at a moment $t_{0-}$ according to an exemplary embodiment of the present disclosure;

FIG. 11 shows an example of operation control states of an energy intensive storage device and a power intensive storage device at a moment $t_{0+}$ according to an exemplary embodiment of the present disclosure;

FIG. 12 shows an example of control states during the over-regulation of the energy intensive storage device and the power intensive storage device according to an exemplary embodiment of the present disclosure;

FIG. 13 shows another example of control states during the over-regulation of the energy intensive storage device and the power intensive storage device according to an exemplary embodiment of the present disclosure;

FIG. 14 shows another example of control states during the over-regulation of the energy intensive storage device and the power intensive storage device according to an exemplary embodiment of the present disclosure;

FIG. 15 shows an example of control states of the energy intensive storage device and the power intensive storage device at the moment $t_{0+}$ according to an exemplary embodiment of the present disclosure;

FIG. 16 shows an example of control states of the energy intensive storage device and the power intensive storage device according to an exemplary embodiment of the present disclosure;

FIG. 17 shows an example of control states of the energy intensive storage device and the power intensive storage device under a stable state according to an exemplary embodiment of the present disclosure;
FIG. 18 shows a structural block diagram of a control device for a micro-grid according to an exemplary embodiment of the present disclosure; and
FIG. 19 shows a block diagram of a topological structure of a regional power system according to an exemplary embodiment of the present disclosure.

## DETAILED DESCRIPTION

Reference will now be made in detail to the embodiments of the present disclosure, examples of which are shown in the accompanying drawings, where like reference numerals refer to like parts throughout. The embodiments will be illustrated below with reference to the accompanying drawings in order to explain the present disclosure.

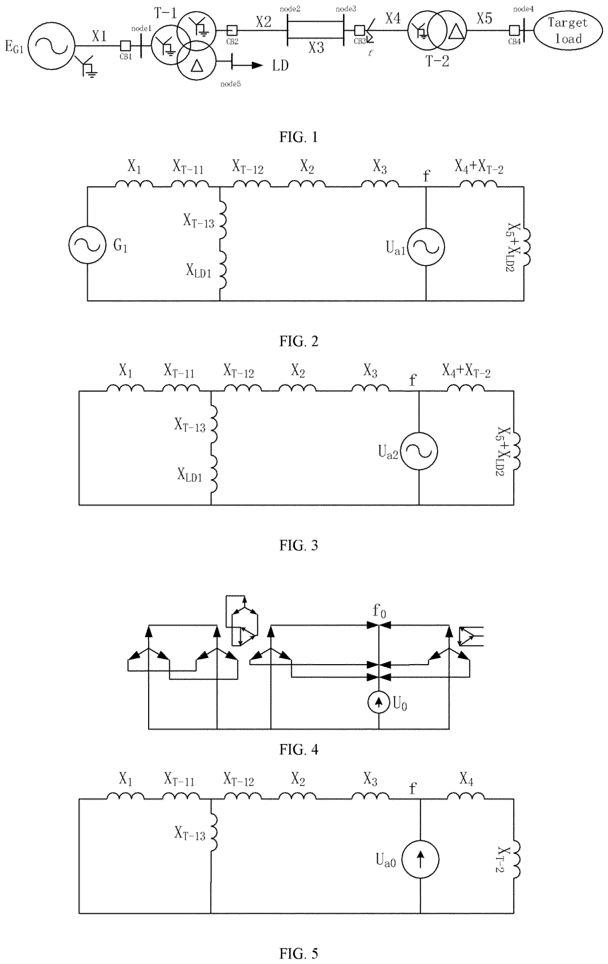

FIG. 1 shows an example of a topological structure of a regional power system according to an exemplary embodiment of the present disclosure.

As shown in FIG. 1, the regional power system is mainly a local power system with a voltage level below 220kV Except for the conventional power system and substations, the rest is mainly composed of zero-carbon local power systems such as loads, large-scale renewable energy sources, energy storages and a micro-grid group. T-1 and T-2 denote transformers, and LD denotes the load and/or a reactive power compensation device.

As shown in FIG. 1, the regional power system mainly includes a regional generator (substation equivalent generator), a three-winding transformer, a two-winding transformer, a power transmission and distribution line, a precision load, etc., and there may be other loads or power distribution branches on the transmission and distribution line, which will not be described in detail herein. The conventional power system forms a 220kV power tie line by means of the substations, and one end of the line is connected to the target load (e.g. a precision load park) in need of stable power supply through a dedicated line. Each node in the topology of the regional power system shown in FIG. 1 will be explained below. Node 1 denotes an infinite power system node, because the capacity of the regional power system is smaller than that of a large power grid. Node 2 denotes a substation outlet node. For the regional power system, the voltage of node 2 is generally at a voltage level of 35kV to 110kV Node 3 is a precision load outlet node, which is usually supplied with power alone through a dedicated line. The line between node 2 and node 3 may be a single-circuit line or a double-circuit power supply line (for increasing the stability of power supply). Node 4 is a medium and low voltage node for the precision load, which is generally at 10kV. Node 5 is a grid connection point where the other loads are located. CB1, CB2, CB3 and CB4 denote circuit breakers on the line.

It should be understood that the protection scope of the present disclosure is not limited to the substation voltage of 110kV, but also applicable to other voltage levels such as substation outlet voltages of 220kV, 35kV, etc. The protection scope of the present disclosure is not limited to a single-circuit power supply line, but also includes a double-circuit power supply line, a ring network power supply line structure, a radial area structure, etc. At the same time, the voltage level of the load node is not limited to 10kV, and other nodes that meet the specifications of medium and low voltage levels are also applicable.

The requirement of the precision load on the stability of power supply is very high. For example, for chip processing equipment, lithography machine, silicon purification equipment, etc, it is required that the voltage cannot be interrupted and needs to be maintained within a specified range. The present disclosure assumes that a fault occurs at a position f (i.e. the fault point) between the node 4 and the node 3. For the convenience of explanation, the topological graph of the above regional power system is equivalently modeled, as shown in FIG. 2. Firstly, the per-unit values of the important components, such as the lines, the transformers, the power supplies and the loads, are calculated. The calculation results are represented with parameters as follows: the generator port voltage is Gi, the high-voltage side star connection impedance of the transformer T-1 is $X_{T-11}$, the low-voltage side star connection impedance of the transformer T-1 is $X_{T-12}$, the low-voltage side delta connection impedance of the transformer T-1 is $X_{T-13}$, and the power transmission line impedance between the equivalent generator and the three-winding transformer T-1 is $X_1$, the impedance from the low-voltage star connection side of the three-winding transformer T-1 to node 2 is $X_2$, the power distribution line impedance from node 2 to node 3 is $X_3$, the dedicated line impedance from node 3 to the high-voltage side of the precision load park transformer T-2 is $X_4$, the line impedance from the low-voltage delta connection side of the transformer T-2 to the park load is $X_5$, the equivalent impedance of the transformer T-2 is $X_{T-2}$, the equivalent impedance of LD is $X_{LD1}$, and the equivalent impedance of the park load is $X_{LD2}$.

The equivalent circuit of a positive-sequence network should include all power system components except neutral grounding impedances, unloaded lines and unloaded transformers. Since there are no unloaded lines and unloaded transformers in FIG. 1, the whole system is further analyzed and optimized to obtain a positive-sequence network diagram of the system as shown in FIG. 2, where $U_{a1}$ denotes a positive-sequence voltage value. By observing the positive-sequence network from a fault point, it can be known as an active network.

Faults of the regional power system will be analyzed below: because the negative-sequence current in a negative-sequence equivalent circuit diagram can flow through the same components as the positive-sequence current, the negative-sequence potentials of all the power supplies are zero. Accordingly, a negative-sequence equivalent circuit diagram subsequent to the occurrence of the fault can be synchronously obtained as shown in FIG. 3, where $U_{a2}$ denotes a negative-sequence voltage value, and by observing the negative-sequence network from a fault point, it can be known as a passive network.

When a non-three-phase fault occurs in the system, zero-sequence fault current is bound to appear. Therefore, a zero-sequence potential representing the occurrence of the fault is applied at a short-circuit point, and zero-sequence current has the same magnitude and phase, so it must pass through the ground to form a closed circuit. The loop of the zero-sequence current must be associated with the neutral grounding component. For a voltage level of 110kV and above, a direct grounding is generally adopted, and the grounding resistance can be ignored. $U_0$ denotes zero-sequence voltage. Accordingly, a zero-sequence equivalent circuit subsequent to the occurrence of the fault can be obtained as shown in FIG. 4 and FIG. 5.

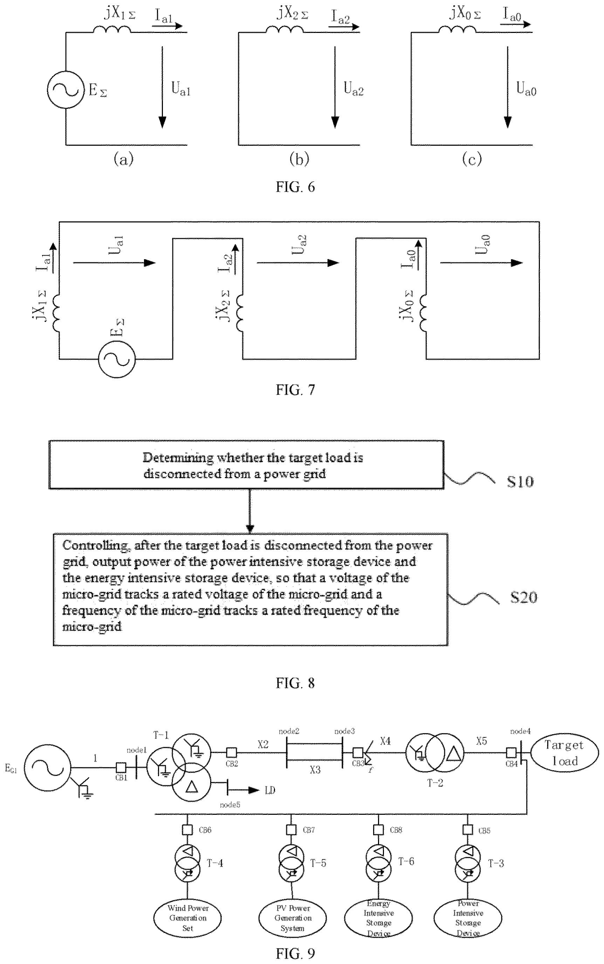

In order to quantitatively calculate the fault current and fault voltage of the system, the positive-sequence network, the negative-sequence network and the zero-sequence network are equivalently calculated. After the equivalent calculation, equivalent circuit diagrams are shown in FIG. 6. Because a single-phase grounding instantaneous short-circuit fault occurs most frequently in actual power systems, it is also the most common fault type. When a single-phase grounding fault occurs at the fault point shown in FIG. 1, there is the following relation:

$$\dot{U}_a = 0, \dot{I}_b = \dot{I}_c = 0 \tag{1}$$

where Ua denotes short-circuit phase (i.e. fault phase) voltage, $\dot{I}_b$ and $\dot{I}_c$ denote non-short-circuit phase current, and formula (1) may be expressed as follows according to the symmetrical component rule:

$$\begin{cases} \dot{U}_{a1} + \dot{U}_{a2} + \dot{U}_{a0} = 0 \\ a^2 \dot{I}_{a1} + a\dot{I}_{a2} + \dot{I}_{a0} = 0 \\ a\dot{I}_{a1} + a^2 \dot{I}_{a2} + \dot{I}_{a0} = 0 \end{cases} \tag{2}$$

where the operator $a$ denotes a phase shift of 120°, $a = e^{j120} = 1\angle 120°$ , and formula (3) may be obtained after the calculation of formula (2):

$$\begin{cases} \dot{U}_{a1} + \dot{U}_{a2} + \dot{U}_{a0} = 0 \\ \dot{I}_{a1} = \dot{I}_{a2} = \dot{I}_{a0} \end{cases} \tag{3}$$

According to formula (3), it can be obtained that the sum of the positive-sequence, negative-sequence and zero-sequence voltages $U_{a1}$, $U_{a2}$ and $U_{a0}$ of the short-circuit phase under a single-phase short-circuit fault is equal to 0, and the positive-sequence, negative-sequence and zero-sequence currents $I_{a1}$, $I_{a2}$ and $I_{a0}$ of the short-circuit phase are equal. Therefore, an equivalent circuit diagram of a composite-sequence network with a single-phase short-circuit fault can be obtained as shown in FIG. 7, and accordingly, the fault current $I_{fault}$ during single-phase short-circuit may be calculated as follows:

$$I_{fault} = \frac{3\dot{E}_\Sigma}{j(X_{1\Sigma} + X_{2\Sigma} + X_{0\Sigma})} \tag{4}$$

where $3E_\Sigma$ denotes synthetic potential, $X_{1\Sigma}$ denotes positive-sequence impedance, $X_{2\Sigma}$ denotes negative-sequence impedance, $X_{0\Sigma}$ denotes zero-sequence impedance, the phase voltage at a metallic grounding fault point is 0, and the fault current is high. When the parameter configuration of the regional power system meets certain conditions to minimize the value of $(X_{1\Sigma} + X_{2\Sigma} + X_{0\Sigma})$, the fault current (i.e. short-circuit current) will be very high, causing the power grid-side circuit breaker CB3 to trip first due to exceeding a set value.

When a permanent fault occurs, the fault is isolated after the power grid-side circuit breaker CB3 is open, and the systems on the left side of CB3 can still operate normally. However, the power supply on the right side of CB3 is interrupted due to the continuous existence of the fault, which leads to the interruption of power consumption by the transformer T-2 and the precision load at the back end, and the power supply for the precision load cannot be guaranteed. For the permanent fault, the power grid-side circuit breaker can be closed for power supply only after the fault is manually cleared, and the duration of power outage may be as long as several hours. As a result, the power supply for the precision load is interrupted, which seriously affects the efficiency and quality of production.

FIG. 8 shows a flowchart of a control method for a micro-grid according to an exemplary embodiment of the present disclosure. The micro-grid is connected to a target load, and the micro-grid include a power intensive storage device (referred to as power intensive storage hereinafter) and an energy intensive storage device (referred to as energy intensive storage hereinafter) as energy storage devices. The target load may be a load that needs stable power supply. As an example, the micro-grid may include at least one photovoltaic power generation system and/or at least one wind power generation set. In addition, the target load is also connected to a power grid.

In order to at least solve the above problems analyzed, the present disclosure proposes a method for protecting a target load when a permanent fault occurs in a micro-grid containing a power intensive storage device and an energy intensive storage device. The present disclosure proposes to connect the micro-grid with an appropriate capacity (the micro-grid contains a power intensive storage device and an energy intensive storage device) in parallel at the outlet end of a target load transformer. On one hand, at the moment when a fault occurs, the power intensive storage device can quickly respond to the fault current of the power grid system at a millisecond speed, and decrease the current pressure applied on a fault point by the power grid at the moment when the fault occurs. On the other hand, after CB3 is open, the power intensive storage device and the energy intensive storage device will jointly serve as transient supporting sources to inhibit the micro-grid system on the right side of CB4 from entering the transient disturbance stage of islanded operation. After transient disturbance ends, the power intensive storage device will serve as a power grid supporting power supply to assist in stabilizing the voltage and frequency of the micro-grid system, while the energy intensive storage device will serve as a main supporting power supply to keep the voltage and frequency of the micro-grid system stable during long-time islanded operation. Renewable energy sources, such as wind power and photovoltaic power, in the system will be continuously operated as follower type power sources for the micro-grid, providing fluctuating, uncertain and random current. As shown in the example in FIG. 9, T-3, T-4, T-5 and T-6 denote transformers, CB5, CB6, CB7 and CB8 denote circuit breakers, and a precision load park is a target load.

As an example, the power intensive storage device may include, but is not limited to, at least one of the following items: supercapacitor energy storage and flywheel energy storage. It should be understood that other suitable types of power intensive storage can also be included, which is not limited by the present disclosure.

As an example, the energy intensive storage device may include, but is not limited to, at least one of the following items: lithium batteries and vanadium redox flow batteries. It should be understood that other suitable types of energy intensive storage can also be included, which is not limited by the present disclosure.

Referring back to FIG. 8, in step S10, whether the target load is disconnected from a power grid is determined, that is, whether the connection between the power grid and the target load is broken is determined.

It should be understood that whether the connection between the power grid and the target load is broken can be judged in an appropriate way, which is not repeated herein.

In step S20, after the target load is disconnected from the power grid (i.e. after the connection between the power grid and the target load is broken), the output power of the power intensive storage device and the energy intensive storage device are controlled, so that the voltage of the micro-grid tracks a rated voltage of the micro-grid and the frequency of the micro-grid tracks a rated frequency of the micro-grid.

Specifically, after the target load is disconnected from the power grid, the output power or absorption yield of the power intensive storage device and the energy intensive storage device are controlled, so as to adjust the stability of the supply power of the micro-grid for the target load.

As an example, the speed of regulating the output power of the power intensive storage device is higher than that of regulating the output power of the energy intensive storage device, so as to prevent reverse tripping caused by over-regulation.

As an example, the virtual inertia used to control the output power of the power intensive storage device may be greater than that used to control the output power of the energy intensive storage device, and/or the droop coefficient used to control the output power of the power intensive storage device may be less than that used to control the output power of the energy intensive storage device, so that the speed of regulating the output power of the power intensive storage device is higher than that of regulating the output power of the energy intensive storage device.

As an example, the control method for a micro-grid according to the exemplary embodiment of the present disclosure may further include: when a short-circuit fault occurs in the power grid and the target load is not disconnected from the power grid, controlling the power intensive storage device and the energy intensive storage device to provide short-circuit current for the fault point of the power grid, so as to prevent the circuit breaker between the target load and the power grid from opening. When the circuit breaker which is a circuit breaker corresponding to the fault point is open, the target load is disconnected from the power grid.

As an example, after the target load is disconnected from the power grid, the output power of the power intensive storage device may be controlled according to the difference between the voltage and the rated voltage of the micro-grid and the difference between the frequency and the rated frequency of the micro-grid.

As an example, after the target load is disconnected from the power grid, the output power of the energy intensive storage device may be controlled according to the output power of the power intensive storage device. As an example, the power angle between the three-phase voltage of the energy intensive storage device and the three-phase voltage of the micro-grid may be controlled according to a real-time change rate of the power angle between the three-phase voltage of the power intensive storage device and the three-phase voltage of the micro-grid. Further, as an example, the power angle between the three-phase voltage of the energy intensive storage device and the three-phase voltage of the micro-grid may be controlled according a the real-time change rate of the power angle between the three-phase voltage of the power intensive storage device and the three-phase voltage of the micro-grid, the output current of each power generation device in the micro-grid, the output current of the power intensive storage device and the input current of the target load.

As an example, the power angle between the three-phase voltage of the energy intensive storage device and the three-phase voltage of the micro-grid may be positively correlated with the real-time change rate.

As an example, the power angle between the three-phase voltage of the energy intensive storage device and the three-phase voltage of the micro-grid may be negatively correlated with a current difference, where the current difference is a value obtained by subtracting the output current value of each power generation device and the input current value of the target load from the output current value of the power intensive storage device.

When a power grid fault occurs, not only fault current is provided by the conventional power grid, but also the power intensive storage device can also provide instantaneous shirt-circuit current. If the power grid fault is a permanent fault, the circuit breaker CB3 at the power grid side is open, and the circuit breaker CB4 at the micro-grid and the precision load side is open, the clearing time of CB4 is required to be faster than that of CB3, and the micro-grid system enters islanded operation with the precision load.

The present disclosure may implement that the flickers or short-time interruption of voltage and frequency will not occur for the target load in the above process. In the above process, the instantaneous transient process of CB4 opening is a key point of the present disclosure. For the convenience of description, the time before CB4 opening is defined as $t_{0-}$, and the time after CB4 opening is defined as $t_{0+}$. Considering that the wind power and photovoltaic power in the micro-grid cannot be changed abruptly (regardless of the situation that CB6 and CB7 are tripped at this moment and wind and photovoltaic equipment instantaneously fails at this moment) and that wind power and photovoltaic power are random, uncertain and fluctuating, the transient instability of the micro-grid system will be caused by the situation that the power of the micro-grid is instantaneously too much or too deficient after CB4 is open. The method of giving first place to the power intensive storage device in transient moment which is supplemented by the energy intensive storage device and the other renewable energy sources proposed by the present disclosure can prevent the transient breakdown of the system caused by the transient disturbance of the system at the moment of CB4 opening.

Another key point of the present disclosure is that when the micro-grid enters the stable islanded operation stage through the above transient process, the power intensive storage device will serve as a supporting power supply and the energy intensive storage device will serve as a main supporting power supply, so as to ensure the safe and stable operation of the system. In the present disclosure, the moment of inertia of the micro-grid entering islanded operation is weak, the anti-disturbance ability is weak, and the power intensive storage device will quickly suppress the disturbance of the system, so that enough time can be reserved for the energy intensive storage device to perform stable regulation, so as to achieve the safe and stable operation of the system.

A method for controlling the power intensive storage device and the energy intensive storage device when a fault occurs in a power grid and the power grid is disconnected from the target load (that is, CB4 is open due to the occurrence of the fault) will be described below. Here, it is required to describe the control method according to the following main situations:

If the load is low, the power of wind power generation and photovoltaic power generation are high, the energy intensive storage device discharges outward and the fault occurs at a position near the load at the moment $t_{0-}$, then the power intensive storage device still provides fault current for the fault point. This situation belongs to an extreme operation state.

At the moment $t_{0+}$, this state still exists. At the moment when CB4 is open, the power intensive storage device and the energy intensive storage device are controlled to change the original output state, and the outward inertia of the power intensive storage device and the energy intensive storage device is regulated in real time during the control process. According to the wind power output power and photovoltaic output power of the system, the output power of the power intensive storage device and the energy intensive storage device are regulated in real time, and the renewable energy sources may be cut off if necessary. As an example, when the target load is disconnected from the power grid and dynamic oscillation of voltage and dynamic oscillation of frequency (caused by the overhigh proportion of the renewable energy sources) occur in the micro-grid, at least one power generation device is cut off from the micro-grid; and/or after the target load is disconnected from the power grid, when the total output power of each power generation device in the micro-grid is greater than the sum of the absorbed power of the power intensive storage device, the energy intensive storage device and the target load, at least one power generation device is cut off from the micro-grid; and/or the faulty power generation device is cut off from the micro-grid. As an example, the power generation devices may include a wind power generation set and/or a photovoltaic power generation system in the micro-grid.

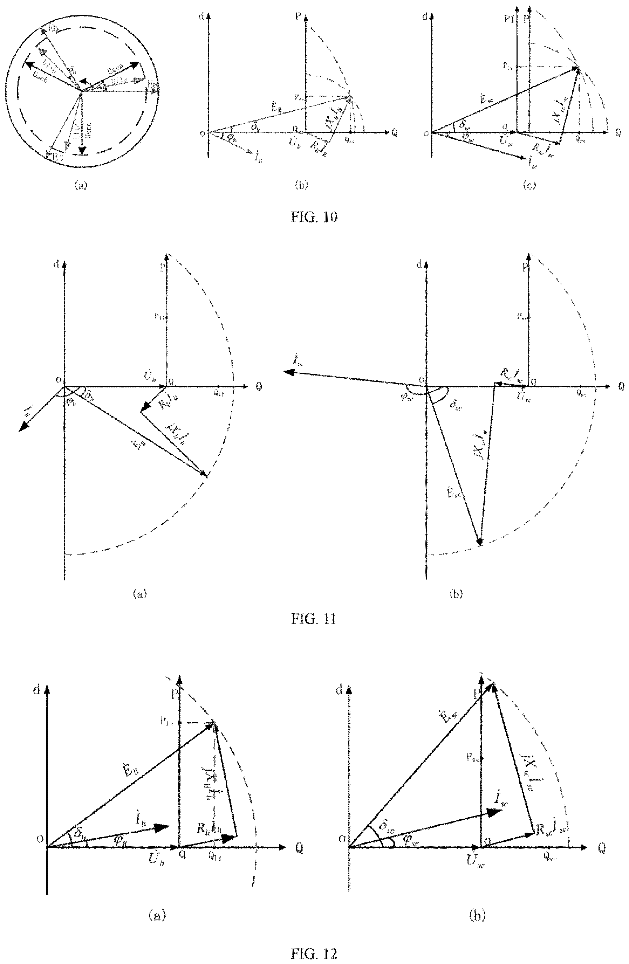

The operation control states of the power intensive storage device and the energy intensive storage device at the moment $t_{0-}$ are shown in FIG. 10, and at the moment when the circuit breaker CB4 is open, the transient characteristics of the power intensive storage device and the energy intensive storage device at the moment $t_{0+}$ (i.e. the moment of switching to islanded operation) are shown in FIG. 11. $\varphi_{li}$ denotes a power factor angle of the energy intensive storage device, $\delta_{li}$ denotes a power angle of the energy intensive storage device, $\dot{E}_{li}$ denotes the internal potential of the energy intensive storage device, $\dot{U}_{li}$ denotes the voltage of the energy intensive storage device, $R_{li}$ denotes the resistance between the energy intensive storage device and the micro-grid, $\dot{I}_{li}$ denotes the current of the energy intensive storage device, $X_{li}$ denotes the reactance between the energy intensive storage device and the micro-grid, $\varphi_{sc}$ denotes a power factor angle of the power intensive storage device, $\delta_{sc}$ denotes a power angle of the power intensive storage device, $\dot{E}_{sc}$ denotes the internal potential of the power intensive storage device, $\dot{U}_{se}$ denotes the voltage of the power intensive storage device, $R_{sc}$ denotes the resistance between the power intensive storage device and the micro-grid, $\dot{I}_{sc}$ denotes the current of the power intensive storage device, and $X_{sc}$ denotes the reactance between the power intensive storage device and the micro-grid.

In the system, $\dot{I}_{li}$ denotes the current of the energy intensive storage device, $\dot{I}_{sc}$ denotes the current of the power intensive storage device, $\dot{I}_{WT}$ denotes the current of the wind power generation set, $\dot{I}_{PV}$ denotes the current of the photovoltaic power generation system, and $\dot{I}_{LD}$ denotes the current of the target load. It can be known from FIG. 10 and FIG. 11 that from the occurrence of a fault to the switching of the system to islanded operation, the state of the power intensive storage device can be controlled to change from a state of outwardly providing fault current to a state of absorbing redundant energy of the system according to a situation. (a) in FIG. 10 describes the phase relation and potential rotation directions between three-phase voltages $U_{sca}$, $U_{scb}$ and $U_{scc}$ at the outlet of the power intensive storage device, three-phase voltages $U_{lia}$, $U_{lib}$ and $U_{lic}$ at the outlet of the energy intensive storage devices and power grids $E_a$, $E_b$ and $E_c$. Because the transient response speed of the power intensive storage device is higher, it needs to be controlled to provide more transient current in this transient process (as shown in FIG. 10 (b)). Moreover, the energy intensive storage device will also gradually change from the state of outwardly providing fault current to the state of absorbing abundant energy of the system after switching. The response speed of the energy intensive storage device should not be higher than that of the power intensive storage device, otherwise it is likely that the system will oscillate to become unstable due to the swing of the power angles caused by over-regulation, or reverse power protection will occur in wind power generation and photovoltaic power generation to cause tripping. For example, when the energy intensive storage device has the same regulating speed as the power intensive storage device, at the moment $t_{0+}$, both the energy intensive storage device and the power intensive storage device reach a first transient current peak subsequent to the switching of the system, as shown in FIG. 11 (a). At this moment, due to the transient response over-regulation of the control system, $\mathrm{Re}(\dot{I}_{li} + \dot{I}_{sc} + \dot{I}_{LD}) > \mathrm{Re}(\dot{I}_{WT} + \dot{I}_{PV})$ is caused (that is, the system frequency is pulled down), the power intensive storage device and the energy intensive storage device will act again to provide power for the system, and the power angles $\delta$ will be reversed. The new states are shown in FIG. 12.

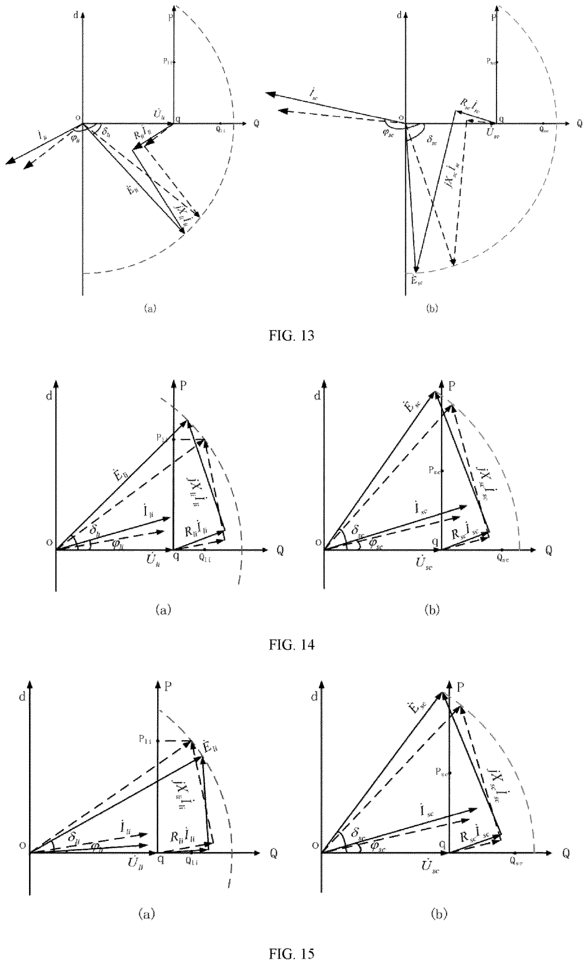

It can be known from the control chart in FIG. 12 above that the power intensive storage device and the energy intensive storage device provide power for the system again, and the power angles $\delta$ are reversed. At this moment, the frequency of the system will increase, resulting in the phenomenon of over-regulation, as a result, wind turbines, photovoltaic power generation or the precision load are likely to trip, and the system in islanded operation may break down. It can be known from the comparison between FIG. 12 and FIG. 10 that the absolute values of the power angles at this moment are greater than the power angles at the moment $t_{0-}$ in FIG. 10. If this over-regulation does not cause system abnormality, the power intensive storage device and the energy intensive storage device will be regulated together again when the system further operates, so that the power angles $\delta$ are reversed again, and both the power intensive storage device and the energy intensive storage device will absorb power from the system again. Because the regulation of the power electronic system is too fast, the moment of inertia of the system is low, and there is almost no damp. The states of the power intensive storage device and the energy intensive storage device at this moment are shown in FIG. 13.

It can be known from the control mode in FIG. 13 that in this control system mode, the dotted lines indicate the control states in FIG. 11, and the solid lines indicate the control states at the current moment. It can be known from FIG. 13 that compared with the power angles in FIG. 11, the power angles in the current absorbed power control mode are increased, and the currents absorbed by the power intensive storage device and the energy intensive storage device are increased. In FIG. 14, the dotted lines indicate the control states in FIG. 12, and the solid lines indicate the control states at the current moment. It can be known from the drawing that compared with the power angle in FIG. 12, the power angles in the current output power control mode are increased, and the currents output by the power intensive storage device and the energy intensive storage device are increased. To sum up, in the process of the micro-grid system being switched to the islanded operation state after a fault occurs at the power grid side, due to the control over-regulation problem of the power intensive storage device and the energy intensive storage device, the rapid and divergent swing of the power angles occurs in the system, and as a result, the system will eventually become unstable.

Therefore, the present disclosure proposes the regulation method which gives first place to the power intensive storage device supplemented by the energy intensive storage device during the transient control of the switching process, and the real-time change rate of the power angle of the power intensive storage device relative to the system is detected in real time, thus realizing the auxiliary control of the energy intensive storage device and enhancing the transient stability of the system. $\delta_{sc}$ is set as a real-time power angle between the power intensive storage device and the micro-grid system, and $\delta_{li}$ is set as a real-time power angle between the energy intensive storage device and the micro-grid system. The currents of wind power generation, photovoltaic power generation, energy storage power generation and the loads in the system are detected in real time. Then, according to $\dot{I}_{li} = \dot{I}_{sc} - \dot{I}_{WT} - \dot{I}_{PV} - \dot{I}_{LD}$, the output power control of the energy intensive storage device is also associated with current. In the present disclosure, $\delta_{li}$ control firstly considers the real-time change rate of the power angle of the power intensive storage device itself relative to the system, i.e. the positive correlation of $\delta_{li}$ and $f\left(\frac{d\delta_{sc}}{dt}\right)$, and secondly, $\delta_{li}$ control is also associated with $\dot{I}_{sc} - \dot{I}_{WT} - \dot{I}_{PV} - \dot{I}_{LD}$, i.e. the negative correlation of $\delta_{li}$ and $g(\dot{I}_{sc} - \dot{I}_{WT} - \dot{I}_{PV} - \dot{I}_{LD})$. The power control of the energy intensive storage device may be expressed as follows:

$$\delta_{li} = f\left(\frac{d\delta_{sc}}{dt}\right) - g\left(\dot{I}_{sc} - \dot{I}_{WT} - \dot{I}_{PV} - \dot{I}_{LD}\right) \tag{5}$$

Because the currents of the wind turbines, the photovoltaic power generation and the loads do not change much during the transient process, the power control of the energy intensive storage device in the transient process of the system is mainly subject to the power of the power intensive storage device in the control method of the above formula. The specific control process may be shown as FIG. 15. First, the state diagrams at the moment $t_{0-}$ are consistent with those in FIG. 10, and the state diagrams at the moment $t_{0+}$ may be shown as FIG. 15. In FIG. 15, the power intensive storage device performs rapid control according to the voltage and frequency deficiency of the micro-grid subsequent to transient instantaneous power grid disconnection, instantaneously increasing power. The energy intensive storage device is no longer in the over-regulated state as shown in FIG. 14, and has undergone stabilization-assisting regulation according to the change rate of the power angle of the power intensive storage device, thus appropriately reducing the output power and enhancing the stability and inertia of the system.

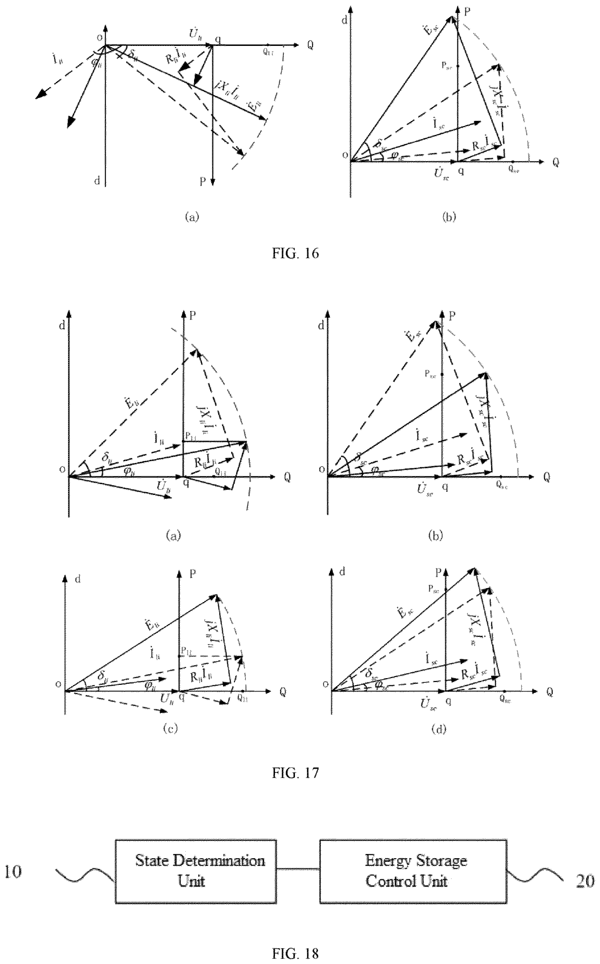

When the transient power of the power intensive storage device reaches the maximum, the change rate of the power angle of the power intensive storage device gradually approaches zero, and the power angle of the energy intensive storage device is mainly determined according to the currents of the wind turbines, the photovoltaic power generation and the target load of the system. If the generated power is greater than the load power, then the power angle of the energy intensive storage device is less than zero (deduced according to Formula (5)). At this moment, the corresponding control state diagrams are shown as FIG. 16.

According to this control method, the state diagrams of the system ultimately approaching transient stability from $t_{0+}$ are shown as FIG. 17. It can be seen that the active power of the energy intensive storage device gradually increases and the active power of the power intensive storage device gradually decreases.

According to the exemplary embodiments of the present disclosure, at least the following beneficial effects can be brought:

1. By introducing the power intensive storage device (supercapacitor energy storage, flywheel energy storage, etc.) and the energy intensive storage device (lithium batteries, vanadium redox flow batteries, etc.) with good economy, the present disclosure realizes the protection of the precision load when a fault occurs in the regional power system, guaranteeing uninterrupted power supply for the precision load and increasing the stability of power supply, and proposes a protection measure of the micro-grid for the precision load. According to the present disclosure, the types of faults that can be dealt with include permanent faults and common transient faults (fast reclosing) in power systems, including metallic grounding faults and non-metallic grounding faults. The present disclosure does not require the addition of additional spinning reserve for important precise loads, which helps to reduce carbon emission.

2. According to the present disclosure, the control method which evaluates based on the fault analysis of the regional power system that the precision load should be equipped with the micro-grid system under various operation states includes the control of the power intensive storage device and the energy intensive storage device when the micro-grid enters the islanded operation state after a fault occurs.

3. According to the present disclosure, when a power grid fault occurs, the power intensive storage device and the energy intensive storage device can act together to provide fault current, and at this stage, the power intensive storage device plays a main role, supplemented by the energy intensive storage device. In this case, regulation can be quickly performed for transient response, so as to instantaneously respond to a transient fault, providing transient current and power for the system, ensuring the stability of the precision load and increasing productivity and product yield. When it is judged that the fault is a permanent fault, the micro-grid is required to enter the islanded mode beyond the plan. At this moment, the energy intensive storage device plays a dominant role, while the power intensive storage device is required to play a supporting role, so as to solve the problem of transient stability caused by unplanned islanded operation.

FIG. 18 shows a structural block diagram of a control device for a micro-grid according to an exemplary embodiment of the present disclosure. The micro-grid is connected to a target load, and energy storage devices of the micro-grid include a power intensive storage device and an energy intensive storage device.

As shown in FIG. 18, the control device for a micro-grid according to the exemplary embodiment of the present disclosure includes a state determination unit 10 and an energy storage control unit 20.

Specifically, the state determination unit 10 is configured to determine whether the target load is disconnected from a power grid.

The energy storage control unit 20 is configured to control the output power of the power intensive storage device and the energy intensive storage device after the target load is disconnected from the power grid, so that the voltage of the micro-grid tracks a rated voltage of the micro-grid and the frequency of the micro-grid tracks a rated frequency of the micro-grid.

As an example, the speed of regulating the output power of the power intensive storage device is higher than that of regulating the output power of the energy intensive storage device.

As an example, the virtual inertia used to control the output power of the power intensive storage device is greater than that used to control the output power of the energy intensive storage device, and/or the droop coefficient used to control the output power of the power intensive storage device is less than that used to control the output power of the energy intensive storage device, so that the speed of regulating the output power of the power intensive storage device is higher than that of regulating the output power of the energy intensive storage device.

As an example, the energy storage control unit 20 may be configured to control the output power of the power intensive storage device according to the difference between the voltage and the rated voltage of the micro-grid and the difference between the frequency and the rated frequency of the micro-grid after the target load is disconnected from the power grid.

As an example, the energy storage control unit 20 may be configured to control the output power of the energy intensive storage device according to the output power of the power intensive storage device after the target load is disconnected from the power grid.

As an example, the energy storage control unit 20 may be configured to control the power angle between the three-phase voltage of the energy intensive storage device and the three-phase voltage of the micro-grid according a the real-time change rate of the power angle between the three-phase voltage of the power intensive storage device and the three-phase voltage of the micro-grid, the output current of each power generation device in the micro-grid, the output current of the power intensive storage device and the input current of the target load after the target load is disconnected from the power grid.

As an example, the power angle between the three-phase voltage of the energy intensive storage device and the three-phase voltage of the micro-grid may be positively correlated with the real-time change rate; and/or the power angle between the three-phase voltage of the energy intensive storage device and the three-phase voltage of the micro-grid may be negatively correlated with a current difference, where the current difference is a value obtained by subtracting the output current value of each power generation device and the input current value of the target load from the output current value of the power intensive storage device.

As an example, the energy storage control unit 20 may also be configured to control the power intensive storage device and the energy intensive storage device to provide short-circuit current for the fault point of the power grid when a short-circuit fault occurs in the power grid and the target load is not disconnected from the power grid, so as to prevent the opening of the circuit breaker between the target load and the power grid; where when the circuit breaker is open, the target load is disconnected from the power grid.

As an example, the control device may further include a power generation device control unit (not shown), which is configured to cut off at least one power generation device from the micro-grid when the target load is disconnected from the power grid and dynamic oscillation of voltage and dynamic oscillation of frequency occur in the micro-grid; and/or cut off at least one power generation device from the micro-grid when the total output power of each power generation device in the micro-grid is greater than the sum of the absorbed power of the power intensive storage device, the energy intensive storage device and the target load after the target load is disconnected from the power grid; and/or cut off the faulty power generation device from the micro-grid.

It should be understood that the specific processing performed by the control device for a micro-grid according to the exemplary embodiment of the present disclosure has been described in detail with reference to FIGs. 1 to 17, and the related details will not be repeated here.

It should be understood that each unit in the control device for a micro-grid according to the exemplary embodiment of the present disclosure may be implemented as a hardware component and/or a software component. Those skilled in the art can implement each unit by using, for example, a field programmable gate array (FPGA) or an application specific integrated circuit (ASIC) according to the defined processing performed by each unit.

An exemplary embodiment of the present disclosure provides a computer-readable storage medium storing a computer program, the computer program causing a processor to execute the control method for a micro-grid as described in the above exemplary embodiment when executed by the processor. The computer-readable storage medium is any data storage device that can store data read by a computer system. Examples of the computer-readable storage medium include a read-only memory, a random access memory, a read-only optical disk, a magnetic tape, a floppy disk, an optical data storage device, and carriers (such as data transmission through the Internet via a wired or wireless transmission path).

The control device for a micro-grid according to the exemplary embodiment of the present disclosure includes a processor (not shown) and a memory (not shown), where a computer program is stored in the memory, the computer program causing the processor to execute the control method for a micro-grid as described in the above exemplary embodiment when executed by the processor. As an example, the electronic device may be a controller or a converter of a wind turbine (e.g. a controller of the converter).

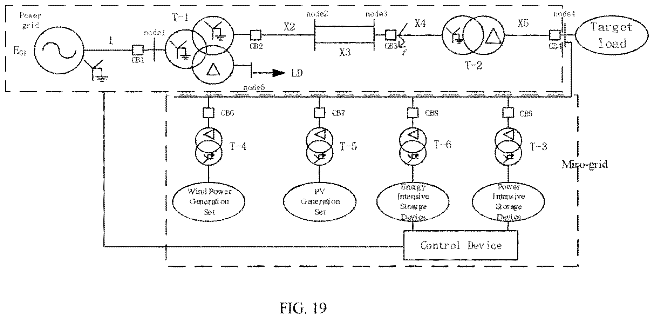

FIG. 19 shows a block diagram of a topological structure of a regional power system according to an exemplary embodiment of the present disclosure.

As shown in FIG. 19, the regional power system according to the exemplary embodiment of the present disclosure includes a micro-grid and the control device for a micro-grid as described in the above exemplary embodiment, the micro-grid being connected to a target load, and energy storage devices of the micro-grid including a power intensive storage device and an energy intensive storage device. The control device for a micro-grid is configured to determine whether the target load is disconnected from a power grid, and control the output power of the power intensive storage device and the energy intensive storage device after the target load is disconnected from the power grid, so that the voltage of the micro-grid tracks a rated voltage of the micro-grid and the frequency of the micro-grid tracks a rated frequency of the micro-grid.

Although some exemplary embodiments of the present disclosure have been shown and described, those skilled in the art should understand that these embodiments can be modified without departing from the principle and spirit of the present disclosure, and the scope of the present disclosure is defined by the claims and equivalents thereof.

**Claims**

1. A control method for a micro-grid, the micro-grid being connected to a target load, the micro-grid comprising a power intensive storage device and an energy intensive storage device as energy storage devices, and the control method comprising:

   determining whether the target load is disconnected from a power grid; and
   controlling, after the target load is disconnected from the power grid, output power of the power intensive storage device and the energy intensive storage device, so that a voltage of the micro-grid tracks a rated voltage of the micro-grid and a frequency of the micro-grid tracks a rated frequency of the micro-grid.

2. The control method according to claim 1, wherein a speed of regulating the output power of the power intensive storage device is higher than that of regulating the output power of the energy intensive storage device.

3. The control method according to claim 2, wherein a virtual inertia used to control the output power of the power intensive storage device is greater than that used to control the output power of the energy intensive storage device, and/or a droop coefficient used to control the output power of the power intensive storage device is less than that used to control the output power of the energy intensive storage device, so that the speed of regulating the output power of the power intensive storage device is higher than that of regulating the output power of the energy intensive storage device.

4. The control method according to claim 1, wherein the step of controlling, after the target load is disconnected from the power grid, the output power of the power intensive storage device comprises:
controlling, after the target load is disconnected from the power grid, the output power of the power intensive storage device according to a difference between the voltage and the rated voltage of the micro-grid and a difference between the frequency and the rated frequency of the micro-grid.

5. The control method according to claim 1, wherein the step of controlling, after the target load is disconnected from the power grid, the output power of the energy intensive storage device comprises:
controlling, after the target load is disconnected from the power grid, the output power of the energy intensive storage device according to the output power of the power intensive storage device.

6. The control method according to claim 5, wherein the step of controlling the output power of the energy intensive storage device according to the output power of the power intensive storage device comprises:
controlling a power angle between a three-phase voltage of the energy intensive storage device and a three-phase voltage of the micro-grid according to a real-time change rate of a power angle between a three-phase voltage of the power intensive storage device and a three-phase voltage of the micro-grid, an output current of each power generation device in the micro-grid, an output current of the power intensive storage device and an input current of the target load.

7. The control method according to claim 6, wherein

the power angle between the three-phase voltage of the energy intensive storage device and the three-phase voltage of the micro-grid is positively correlated with the real-time change rate; and/or
the power angle between the three-phase voltage of the energy intensive storage device and the three-phase voltage of the micro-grid is negatively correlated with a current difference, wherein the current difference is a value obtained by subtracting the output current value of each power generation device and the input current value of the target load from the output current value of the power intensive storage device.

8. The control method according to claim 1, further comprising:

when a short-circuit fault occurs in the power grid and the target load is not disconnected from the power grid, controlling the power intensive storage device and the energy intensive storage device to provide a short-circuit current for a fault point of the power grid, so as to avoid the disconnection of a circuit breaker between the target load and the power grid;
wherein when the circuit breaker is disconnected, the target load is disconnected from the power grid.

9. The control method according to claim 1, further comprising:

when the target load is disconnected from the power grid and dynamic oscillations of voltage and dynamic oscillations of frequency occur in the micro-grid, cutting off at least one power generation device from the micro-grid; and/or
after the target load is disconnected from the power grid, when a total output power of each power generation device in the micro-grid is greater than a sum of absorbed power of the power intensive storage device, the energy intensive storage device and the target load, cutting off at least one power generation device from the micro-grid; and/or
cutting off a faulty power generation device from the micro-grid.

10. A control device for a micro-grid, the micro-grid being connected to a target load, the micro-grid comprising a power intensive storage device and an energy intensive storage device as energy storage devices, and the control device comprising:

a state determination unit, configured to determine whether the target load is disconnected from a power grid; and
an energy storage control unit, configured to control, after the target load is disconnected from the power grid, output power of the power intensive storage device and the energy intensive storage device, so that a voltage of the micro-grid tracks a rated voltage of the micro-grid and a frequency of the micro-grid tracks a rated frequency of the micro-grid.

11. A computer-readable storage medium storing a computer program, the computer program, when executed by the processor, causing a processor to execute the control method for a micro-grid according to any of claims 1 to 9.

12. A control device for a micro-grid, comprising:

a processor; and
a memory, storing a computer program, the computer program, when executed by the processor, causing the processor to execute the control method for a micro-grid according to any of claims 1 to 9.

13. A regional power system, comprising: a micro-grid and the control device for the micro-grid according to claim 10 or 12, the micro-grid being connected to a target load, and the micro-grid comprising a power intensive storage device and an energy intensive storage device as energy storage device; and
the control device being configured to determine whether the target load is disconnected from a power grid, and control, after the target load is disconnected from the power grid, output power of the power intensive storage device and the energy intensive storage device, so that a voltage of the micro-grid tracks a rated voltage of the micro-grid and a frequency of the micro-grid tracks a rated frequency of the micro-grid.

FIG. 1

FIG. 2

FIG. 3

FIG. 4

FIG. 5

FIG. 6

FIG. 7

Determining whether the target load is disconnected from a power grid — S10

Controlling, after the target load is disconnected from the power grid, output power of the power intensive storage device and the energy intensive storage device, so that a voltage of the micro-grid tracks a rated voltage of the micro-grid and a frequency of the micro-grid tracks a rated frequency of the micro-grid — S20

FIG. 8

FIG. 9

FIG. 10

FIG. 11

FIG. 12

FIG. 13

FIG. 14

FIG. 15

FIG. 16

FIG. 17

FIG. 18

FIG. 19

## INTERNATIONAL SEARCH REPORT

| International application No. |
| --- |
| **PCT/CN2022/080424** |

### A. CLASSIFICATION OF SUBJECT MATTER

H02J 3/24(2006.01)i

According to International Patent Classification (IPC) or to both national classification and IPC

### B. FIELDS SEARCHED

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; DWPI; VEN; CNKI; IEEE: 微电网, 微网, 储能, 超级电容, 电池, 飞轮, 孤岛, 离网, 电压, 频率, 负载, 负荷, 下垂, 虚拟惯量, microgrid, energy storage, supercapacitor, battery, flywheel, island, off-grid, voltage, frequency, load, droop, virtual inertia

### C. DOCUMENTS CONSIDERED TO BE RELEVANT

| Category* | Citation of document, with indication, where appropriate, of the relevant passages | Relevant to claim No. |
| --- | --- | --- |
| X | 郭潇潇 等 (GUO, Xiaoxiao et al.). "风电孤岛模式下混合储能装置调频调压策略 (Frequency and Voltage Modulation Control Strategy for Hybrid Energy Storage Device in Wind Power Island Mode)" 电网与清洁能源 (*Power System and Clean Energy*), Vol. 35, No. 10, 31 October 2019 (2019-10-31), ISSN: 1674-3814, pages 96-102 | 1-13 |
| X | 张继红 等 (ZHANG, Jihong et al.). "基于孤岛模式的双储能微电网下垂协调控制及仿真 (Droop Coordinated Control And Simulation Based on Islanded Microgrid of Dual Energy Storage)" 太阳能学报 (*Acta Energiae Solaris Sinica*), Vol. 36, No. 1, 31 January 2015 (2015-01-31), ISSN: 0254-0096, pages 146-152 | 1-13 |
| X | CN 111446725 A (TAIYUAN UNIVERSITY OF TECHNOLOGY) 24 July 2020 (2020-07-24) description, paragraphs 29-45, and figures 1-13 | 1-13 |

☑ Further documents are listed in the continuation of Box C. ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **30 August 2022** | **13 September 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/080424**

C. DOCUMENTS CONSIDERED TO BE RELEVANT

| Category* | Citation of document, with indication, where appropriate, of the relevant passages | Relevant to claim No. |
|---|---|---|
| A | CN 110474354 A (NARI GROUP CORP. et al.) 19 November 2019 (2019-11-19)<br>entire document | 1-13 |
| A | CN 205283237 U (DUNSHI MAGNETIC ENERGY TECHNOLOGY CO., LTD.) 01 June 2016 (2016-06-01)<br>entire document | 1-13 |
| A | CN 110544938 A (NANJING NARI-RELAYS ELECTRIC CO., LTD.) 06 December 2019 (2019-12-06)<br>entire document | 1-13 |
| A | US 2014375125 A1 (NEC LAB AMERICA INC.) 25 December 2014 (2014-12-25)<br>entire document | 1-13 |

Form PCT/ISA/210 (second sheet) (January 2015)

## INTERNATIONAL SEARCH REPORT
### Information on patent family members

International application No.

**PCT/CN2022/080424**

| Patent document cited in search report | | | Publication date (day/month/year) | Patent family member(s) | | | Publication date (day/month/year) |
|---|---|---|---|---|---|---|---|
| CN | 111446725 | A | 24 July 2020 | None | | | |
| CN | 110474354 | A | 19 November 2019 | CN | 110474354 | B | 05 February 2021 |
| CN | 205283237 | U | 01 June 2016 | None | | | |
| CN | 110544938 | A | 06 December 2019 | None | | | |
| US | 2014375125 | A1 | 25 December 2014 | US | 9568931 | B2 | 14 February 2017 |
| | | | | US | 2015142190 | A1 | 21 May 2015 |
| | | | | US | 9733657 | B2 | 15 August 2017 |

Form PCT/ISA/210 (patent family annex) (January 2015)